# EUROPEAN PATENT SPECIFICATION

(11) **EP 3 945 819 B1**
(45) Date of publication and mention of the grant of the patent: **15.04.2026**
(21) Application number: 20713688.8
(22) Date of filing: 31.03.2020
(51) Int. Cl.: A01N 33/12, A01N 25/10, A01P 1/00, C08G 63/685

(54) **USE OF SPECIFIC HYPERBRANCHED COPOLYMERS AS ANTIMICROBIAL AGENTS**
VERWENDUNG VON SPEZIFISCHEN HOCHVERZWEIGTEN COPOLYMEREN ALS ANTIMIKROBIELLE MITTEL
UTILISATION DE COPOLYMÈRES HYPERRAMIFIÉS SPÉCIFIQUES EN TANT QU'AGENTS ANTIMICROBIENS

(30) Priority: 01.04.2019 EP 19166545
(43) Date of publication of application: 09.02.2022
(73) Proprietor: DSM IP Assets B.V., 6221 BE Maastricht (NL)
(72) Inventor: MENDROK-EDINGER, Christine, 4303 Kaiseraugst (CH); HECKER, Karina, 4303 Kaiseraugst (CH)
(74) Representative: dsm-firmenich IP
(86) International application number: PCT/EP2020/059111
(87) International publication number: WO 2020/201279

(56) References cited:
- WO-A1-2014/040811
- WO-A1-2014/041019
- "Research disclosure", RESEARCH DISCLOSURE, KENNETH MASON PUBLICATIONS, HAMPSHIRE, UK, GB, vol. 606, no. 33, 1 October 2014 (2014-10-01), pages 5, XP007143477, ISSN: 0374-4353, [retrieved on 20140916]
- YAN XUE ET AL: "Antimicrobial Polymeric Materials with Quaternary Ammonium and Phosphonium Salts", INTERNATIONAL JOURNAL OF MOLECULAR SCIENCES, vol. 16, no. 2, 6 February 2015 (2015-02-06), pages 3626 - 3655, XP055493340, DOI: 10.3390/ijms16023626
- HADI BAKHSHI ET AL: "Hyperbranched polyesters as biodegradable and antibacterial additives", JOURNAL OF MATERIALS CHEMISTRY B, vol. 5, no. 33, 1 January 2017 (2017-01-01), GB, pages 6827 - 6834, XP055587856, ISSN: 2050-750X, DOI: 10.1039/C7TB01301A

## Description

### Technical Field

The reduction of growth of microorganisms is an economically highly important field of research.

### Background of the invention

Microorganisms lead to the decay of food and goods of daily use such as cosmetic compositions, household products, plastics, paper or paints. Particularly, cosmetic products are prone to be attacked by microorganisms The reduction of growth of microorganisms is essential for the consumers safety and health when using a cosmetic product. By reducing the growth of microorganisms, the shelf life of a cosmetic product can be increased. Currently a variety of substances are known to reduce the growth of microorganism. As the use of certain antimicrobial agents are under public discussions a reduction of antimicrobial agents is a strong desire in the cosmetic industry.

EP 2 794 729 B1 disclose the preparation of specific hyperbranched polyesters which can be used as flocculants in paper production and in dishwater detergents.

EP 2 296 619 B1 discloses that specific hyperbranched copolymers have an advantageous effect in a shampoo for increasing the volume of hair.

Hadi Bakhshi et al, in their article titled "Hyperbranched polyesters as biodegradable and antibacterial additives" published in . Mater. Chem. B, 2017. Vol. 5. page 6827 and following, describe polymers with a polyester backbone and terminal -N(alkyl)₃ groups.

### Summary of the invention

Therefore, the problem to be solved by the present invention is to offer a new possibility to inhibit microbial growth.

It has been surprisingly found that a specific hyperbranched copolymer has significant antimicrobial action, particularly when used in a cosmetic composition. This surprising finding is very advantageous as this invention can lead to higher stability, longer shelf life, respectively, to the reduction of other preservatives, particularly in cosmetic compositions, by, nevertheless, maintaining the antimicrobial properties.

Further aspects of the invention are subject of further independent claims. Particularly preferred embodiments are subject of dependent claims.

### Detailed description of the invention

In a first aspect the present invention relates to the non-therapeutic use of a hyperbranched copolymer **(HBC)** of the monomers
(i) dodecenyl succinic acid anhydride
(ii) diisopropanol amine
(iii) bis-dimethylaminopropyl amine
having terminal groups of the formula 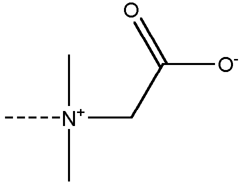 and having a molecular weight Mn of between 1200 and 4000 g/mol; as an antimicrobial agent.

The term "molecular weight Mn" stands for the number average molecular weight.

The term "preparation" or "formulation" is used in this document as equivalent to the term "composition".

The term "antimicrobial agent" is used in this document for an organic chemical substance which reduces the growth of microorganisms.

The hyperbranched copolymer **(HBC)** is preferably prepared by the following consecutive steps of:
a1) polymerizing the monomers (i) and monomers (ii) and monomers (iii) to yield a polyesteramide having terminal dimethyl amino groups of the formula 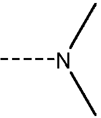
a2) quaternization of the dimethyl amino groups of the polyesteramide of step a1) by 2-chloroacetate, particularly by sodium 2-chloroacetate.
Details for the polymerization step a1) to yield the respective polyesteramide having terminal dimethyl amino groups of the formula 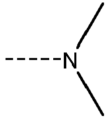 are disclosed for example by EP 2 794 729 B1.

Preferably in the polymerization step a1) the monomer (iii) is added to a mixture of monomers (ii) and (iii) under stirring, followed by heating.

Details of the quaternization step a2) are disclosed as well by EP 2 794 729 B1.

It is preferred that the molar ratio of the monomers (i) to monomers (ii) is between 5: 1 and 0.5 : 1, particularly between 4 : 1 and 1 : 1, preferably between 3 : 1 and 3 : 2.

It is further preferred that the molar ratio of the monomers (i) to monomers (iii) is between 5 : 1 and 0.5 : 1, particularly between 3 : 1 and 1 : 1, preferably between 2.5 : 1 and 1.1 : 1.

The hyperbranched copolymer **(HBC)** has preferably a number average molecular weight Mₙ of between 1400 and 3000 g/mol, preferably between 2100 and 2400 g/mol.

Preferably, the hyperbranched copolymer **(HBC)** is polyquaternium-110, also identified by CAS Number 1323977-82-7.

It has been observed that the hyperbranched copolymer **(HBC)** has antimicrobial action against microorganisms. The hyperbranched copolymer **(HBC)** inhibits particularly the growth of a microorganism selected from the group consisting of *Kocuria rhizophila, Staphylococcus aureus, Enterobacter gergoviae, Escherichia coli, Klebsiella pneumoniae, Pseudomonas aeruginosa, Pseudomonas fluorescens, Pseudomonas putida, Aspergillus brasiliensis, Penicillium pinophilum* and *Candida albicans.*

The hyperbranched copolymer **(HBC)** inhibits ppreferably the growth of *Escherichia coli, Pseudomonas aeruginosa, Staphylococcus aureus, Aspergillus brasiliensis,* and *Candida albicans.*

The microbial agent mixture can be used in different fields.

Particularly, the hyperbranched copolymer **(HBC)** is used as an antimicrobial agent in a product selected from the group of cosmetic compositions, household products, plastics, paper and/ or paints, preferably in a cosmetic composition.

The hyperbranched copolymer **(HBC)** is used as antimicrobial agent in a non-therapeutic sense.

Hence, the use is a non-therapeutic use, preferably a cosmetic use.

The cosmetic (i.e. a non-therapeutic) use is particularly as for maintenance of skin homeostasis and/or balancing the skin microbiome and/or hair microbiome.

The hyperbranched copolymer **(HBC)** is preferably used in an amount of 0.005 to 5.0 % by weight, more preferably of 0.05 - 5.0 % by weight, even more preferably of 0.1 - 3.0 % by weight, most preferably of 0.5 - 2.5 % by weight, based on the weight of a composition to which the hyperbranched copolymer **(HBC)** is to be added as antimicrobial agent.

The hyperbranched copolymer **(HBC)** is preferably used as antimicrobial agent in a cosmetic composition.

The cosmetic composition further preferably comprises at least one emulsifier, preferably an anionic emulsifier. Preferably the anionic emulsifier is an anionic emulsifier selected from the group consisting of potassium cetyl phosphate, disodium cetearyl sulfosuccinate, sodium stearoyl glutamate, sodium stearoyl lactylate, glyceryl stearate citrate and sodium cocoyl isethionate.

Potassium cetyl phosphate is commercially available as Amphisol^{®} K at DSM Nutritional Products Ltd Kaiseraugst.

The amount of emulsifier is preferably in the range between 0.1 - 6.0 % by weight, more preferably between 0.25 - 5.0 % by weight, particularly between 0.5 - 4.0 % by weight, based on the total weight of the cosmetic composition.

The composition is preferably sulfate-free.

Hence, the cosmetic composition is preferably particularly free of sulfates of the group consisting of alkyl sulfates, alkyl ether sulfates, alkyl amido ether sulfates, alkylaryl polyether sulfates and monoglycerides sulfate as well as mixtures thereof.

The term "free" as used in the present document, for example in "sulfate-free", is used to mean that the respective substance is only present at amounts of less than 0.5 % by weight, particularly less than 0.1 % by weight, more particularly below 0.05 % by weight, relative to the weight of the composition. Preferably, "free" means that the respective substance is completely absent in the composition.

The term "sulfate-free" is used in the present document to mean that the composition is free of any anionic tenside having a terminal anionic group of the formula

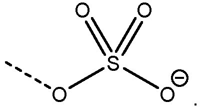

The cosmetic composition is preferably free of cationic emulsifiers. Typical example for such cationic emulsifiers are isostearamidopropyl dimethylamine, stearalkonium chloride, stearamidoethyl diethylamine, behentrimonium methosulfate, behenoyl PG-trimonium chloride, cetrimonium bromide, behenamidopropyl dimethylamine behenate, brassicamidopropyl dimethylamine, stearamidopropyl dimethylamine stearate, cocamidopropyl PG-dimonium chloride, distearoylethyl hydroxyethylmonium methosulfate, dicocoylethyl hydroxyethylmonium methosulfate, distearoylethyl dimonium chloride, shea butteramidopropyltrimonium chloride, behenamidopropyl dimethylamine, brassicyl isoleucinate esylate, acrylamidopropyltrimonium chloride/acrylates copolymer, linoleamidopropyl ethyldimonium ethosulfate, dimethyl lauramine isostearate, isostearamidopropyl laurylacetodimonium chloride, particularly behentrimonium chloride, distearyldi-monium chloride, cetrimonium chloride, steartrimonium chloride, and palmitamido-propyltrimonium chloride.

The cosmetic composition further may comprise cosmetic carriers, excipients and diluents as well as additives and active ingredients commonly used in the skin care industry which are suitable for use in the cosmetic are for example described in the International Cosmetic Ingredient Dictionary & Handbook by Personal Care Product Council (http://www.personalcarecouncil.org/), accessible by the online INFO BASE (http://online.personalcarecouncil.org/jsp/Home.jsp), without being limited thereto.

Such possible ingredients of the cosmetic composition are particularly enhance the performance and/or consumer acceptability such as preservatives, antioxidants, fatty substances/oils, thickeners, softeners, light-screening agents, moisturizers, fragrances, co-surfactants, fillers, sequestering agents, cationic-, nonionic- or amphoteric polymers or mixtures thereof, acidifying or basifying agents, viscosity modifiers, and natural hair nutrients such as botanicals, fruit extracts, sugar derivatives and/or amino acids or any other ingredients usually formulated into cosmetic compositions. The necessary amounts of the adjuvants and additives can, based on the desired product, easily be chosen by a person skilled in the art in this field and will be illustrated in the examples, without being limited hereto.

The additional ingredients can either be added to the oily phase, the aqueous phase or separately as deemed appropriate.

In an advantageous embodiment, the cosmetic compositions comprise from 50% to 99%, preferably from 60% to 98%, more preferably from 70% to 98%, such as in particular from 80% to 95% of a carrier, based on the total weight of the cosmetic composition.

In a particular advantageous embodiment, the carrier consists furthermore of at least 40 wt. %, more preferably of at least 50 wt.-%, most preferably of at least 55 wt.-% of water, such as in particular of 55 to 90 wt.-% of water.

Furthermore, it is preferred that the cosmetic composition comprises at least one UV filter. The UV filter may be a liquid or solid UV filter. The UV filter may be a UV-A or UV-B filters.

Suitable liquid UV-filter absorb light in the UVB (280 - 315 nm) and/ or UVA (315 - 400 nm) range and are liquid at ambient temperature (i.e. 25°C). Such liquid UV-filter are well known to a person in the art and encompass in particular cinnamates such as e.g. octyl methoxycinnamate (PARSOL^{®} MCX) and isoamyl methoxycinnamate (Neo Heliopan^{®} E 1000), salicylates such as e.g. homosalate (3,3,5 trimethylcyclohexyl 2-hydroxybenzoate, PARSOL^{®} HMS) and ethylhexyl salicylate (also known as ethylhexyl salicylate, 2 ethylhexyl 2-hydroxybenzoate, PARSOL^{®} EHS), acrylates such as e.g. octocrylene (2 ethylhexyl 2-cyano-3,3-diphenylacrylate, PARSOL^{®} 340) and ethyl 2-cyano-3,3 diphenylacrylate, esters of benzalmalonic acid such as in particular dialkyl benzalmalonates such as e.g. di (2-ethylhexyl) 4-methoxybenzalmalonate and polysilicone 15 (PARSOL^{®} SLX), dialkylester of naphthalates such as e.g. diethylhexyl 2,6-naphthalate (Corapan^{®} TQ), syringylidene malonates such as e.g. diethylhexyl syringylidene malonate (Oxynex^{®} ST liquid) as well as benzotriazolyl dodecyl p-cresol (Tinoguard^{®} TL) as well as benzophenone-3 and drometrizole trisiloxane.

Particular advantageous liquid UV-filter are octyl methoxycinnamate, homosalate, ethylhexyl salicylate, octocrylene, diethylhexyl 2,6-naphthalate, diethylhexyl syringylidene malonate, benzotriazolyl dodecyl p-cresol, benzophenone-3, drometrizole trisiloxane, Polysilicone-15 as well as mixtures thereof.

Suitable solid UV-filter absorb light in the UVB and/ or UVA range and are solid at ambient temperature (i.e. 25°C). They are particularly solid organic UV filters. Particularly suited solid UV-filters are of the group consisting of bis-ethyl-hexyloxyphenol methoxyphenyl triazine, butyl methoxydibenzoyl methane, methylene bis-benzotriazolyl tetramethylbutylphenol, diethylamino hydroxybenzoyl hexyl benzoate, ethylhexyl triazone, diethylhexyl butamido triazone and 4-methylbenzylidene camphor.

The amount of an individual organic UV filter is preferably in the range of 0.1 to about 6 % by weight, preferable in the range of 0.5 to 5 % by weight, most preferably in the range of 1 to 4 % by weight, based on the total weight of the cosmetic composition.

In case of a sun care composition, the total amount of organic UV filter (s) depends strongly on the targeted UV protection of said composition and is typically in the range of between 1 to 50% by weight, preferably between 5 to 40% by weight, based on the total weight of said composition.

A sun creme with an SPF 15 (SPF=sun protection factor), for example, comprises preferably a total amount of organic UV filter (s) of between 4 to 20% by weight, more preferably between 7 and 15 % by weight, based on the total weight of said composition.

A sun creme with an SPF 30, for example, comprises preferably a total amount of organic UV filter (s) of between 10 to 40% by weight, more preferably between 15 and 25 % by weight, based on the total weight of said composition.

A sun creme with an SPF 50, for example, comprises preferably a total amount of organic UV filter (s) of between 15 to 50% by weight, more preferably between 20 and 40 % by weight, based on the total weight of said composition.

Particularly suitable thickeners are xanthan gum, gellan gum and/ or carboxymethylcellulose. Most preferably the thickener is xanthan gum or gellan gum. Further suitable thickeners are polyacrylates such as commercially available under the trade name Carbomer, or acrylate/C10-30 alkyl acrylate crosspolymers or salts of polyacrylic acid or polyacrylamides.

Such thickener(s) are preferably used in an amount (total) selected in the range from 0.1 to 1 wt.-%, more preferably in an amount of 0.1 to 0.5 wt.-%, based on the total weight of the cosmetic composition.

It is preferred that the composition is free of polyvinylpyrrolidones (PVP), particularly free of alkylated polyvinylpyrrolidiones, such as copolymers of N-vinyl-pyrrolidones and hexadecane or eicosene, e.g. as commercially available as Antaron V-216 or Antaron V-220.

The cosmetic compositions in general have a pH in the range from 3 to 10, preferably a pH in the range from 4 to 8 and most preferably a pH in the range from 4 to 7.5. The pH is adjusted by methods known to a person skilled in the art, e.g. by using an acid such as a hydroxy acid including glycolic acid, lactic acid, malic acid, citric acid and tartaric acid or a base such as e.g. sodium or potassium hydroxide or ammonium hydroxide as well as mixtures thereof.

Preferably, in the cosmetic compositions have citric acid in an amount of at least 0.0001 wt.-%, such as e.g. in an amount of 0.01-1 wt.-%, in particular in an amount of 0.01 to 0.5 wt.-% is used for pH adjustment.

The cosmetic composition is preferably sulfate-free and/or free of para-bens, and/or silicon oils and/or silicone surfactants and/or methylisothiazolidine and/or free of polyvinylpyrrolidones (PVP), particularly free of alkylated polyvinylpyrrolidiones.

The cosmetic composition is preferably a topical composition.

The term "topical" as used herein is understood here to mean external application to keratinous substances, which are in particular the skin, scalp, eyelashes, eyebrows, nails, mucous membranes and hair, preferably the skin.

As the topical compositions are intended for topical application, it is well understood that they comprise a physiologically acceptable medium, i.e. a medium compatible with keratinous substances, such as the skin, mucous membranes, and keratinous fibres. In particular, the physiologically acceptable medium is a cosmetically acceptable carrier.

The term "cosmetically acceptable carrier" refers to all carriers and/or excipients and/ or diluents conventionally used in cosmetic compositions such as in particular in sun care products.

Preferably the cosmetic composition is a skin care composition.

In a further embodiment, the cosmetic composition is a decorative preparation or a functional preparation.

Examples of skin care compositions are, in particular, light protective composition, anti-ageing composition, compositions/preparations for the treatment of photo-ageing, body oils, body lotions, body gels, treatment creams, skin protection ointments, skin powders, moisturizing gels, moisturizing sprays, face and/or body moisturizers, skin-tanning preparations (i.e. compositions for the artificial/sunless tanning and/or browning of human skin), for example self-tanning creams as well as skin lightening compositions.

Examples of functional preparations are cosmetic compositions containing active ingredients such as hormone preparations, vitamin preparations, vegetable extract preparations, anti-ageing preparations, and/or antimicrobial (antibacterial or antifungal) preparations without being limited thereto.

The cosmetic composition is preferably a skin care composition.

In a particular embodiment, the cosmetic composition is a sun care composition. Sun care compositions are light-protective composition (sun care products), such as sun protection milks, sun protection lotions, sun protection creams, sun protection oils, sun blocks or day care creams with a SPF (sun protection factor). Sun protection creams, sun protection lotions, sun protection milks and sun protection compositions are of particular interest.

The cosmetic compositions may be in the form of a suspension or dispersion in solvents or fatty substances, or alternatively in the form of an emulsion or micro emulsion (in particular of oil-in-water (O/W-) or water-in-oil (W/O-)type, silicone-in-water (Si/W-) or water-in-silicone (W/Si-)type, PIT-emulsion, multiple emulsion (e.g. oil-in-water-in oil (O/W/O-) or water-in-oil-in-water (W/O/W-)type), pickering emulsion, hydrogel, alcoholic gel, lipogel, one- or multiphase solution or vesicular dispersion or other usual forms, which can also be applied by pens, as masks or as sprays.

Preferred cosmetic compositions are emulsions which contain an oily phase and an aqueous phase such as in particular O/W, W/O, Si/W, W/Si, O/W/O, W/O/W multiple or a pickering emulsions.

The total amount of the oily phase present in such emulsions is preferably at least 10 wt.-%, such as in the range from 10 to 60 wt.-%, preferably in the range from 15 to 50 wt.-%, most preferably in the range from 15 to 40 wt.-%, based on the total weight of the cosmetic composition.

The amount of the aqueous phase present in such emulsions is preferably at least 20 wt. %, such as in the range from 40 to 90 wt.-%, preferably in the range from 50 to 85 wt.-%, most preferably in the range from 60 to 85 wt.-%, based on the total weight of the cosmetic composition.

The cosmetic compositions can be in the form of a liquid, lotion, a thickened lotion, a gel, a cream, a milk, an ointment or a paste.

More preferably, the cosmetic compositions are in the form of an oil-in-water (O/W) emulsion comprising an oily phase dispersed in an aqueous phase in the presence of an O/W- respectively Si/W-emulsifier. The preparation of such O/W emulsions is well known to a person skilled in the art.

The cosmetic compositions in form of O/W emulsions can be provided, for example, in all the formulation forms for O/W emulsions, for example in the form of serum, milk or cream, and they are prepared according to the usual methods. The cosmetic compositions are preferably intended for topical application and can in particular constitute a dermatological or cosmetic composition, for example intended for protecting human skin against the adverse effects of UV radiation (antiwrinkle, anti-ageing, moisturizing, anti-sun protection and the like).

It is preferred that the cosmetic composition is a shampoo or a hair conditioner.

It is further preferred, that the cosmetic composition is a topical composition applied to the human skin, scalp and/ or hair.

Preferably, that the use is in a deodorant, a shampoo, a conditioner, a cream or a sunscreen.

The composition may also comprise additional antimicrobial agents.

Such antimicrobial agents are known as such to the person skilled in the art. The field of use, however, limits the choice of antimicrobial agents which are mainly due particularly to regulatory issues. In the field of food and cosmetics the choice of antimicrobial agents is rather limited.

Therefore, preferred antimicrobial agents are antimicrobial agents which are acceptable in the field of food and cosmetics.

In one of the preferred embodiments the antimicrobial agent is selected from the group consisting of:
- monoesters or monoethers of glycerol;
- salts or esters of aromatic acids;
- alkylarylic alcohols;
- phenolic ether alcohols;
- hydroxyacetophenone
- aliphatic diols; and
- hydroxamic acids.

Preferred monoesters or monoethers of glycerol are those of formula (I) 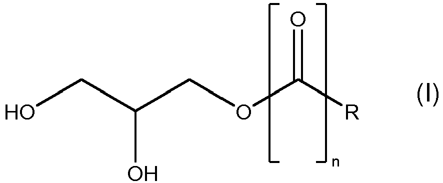
wherein R is a C₅-C₁₀ alkyl group or C₅-C₁₀ cyclo alkyl group, preferably a C₆-C₉ alkyl group or a C₆-C₉ cyclo alkyl group, more preferably a C₆ alkyl group or a C₈ alkyl group or a C₆ cyclo alkyl group;
and wherein n is either 1 or 0, preferably 0.

In case, where n=0, R is preferably cyclohexyl or n-octyl or n-hexyl or a branched octyl group, preferably an n-hexylgroup or an ethylhexyl group, more preferably a 2-ethylhexyl group.

In case, where n=1, R is preferably a branched or unbranched saturated or olefinically unsaturated heptyl or nonyl group, preferably a saturated or olefinically unsaturated heptyl or nonyl group, more preferably n-octyl or n-nonyl group, most preferred n-nonyl group. A preferred embodiment is glyceryl caprylate.

The monoester or monoethers of glycerol of the formula (I) is preferably selected from the group consisting of cyclohexyl glycerin, hexyl glycerine, ethylhexyl glycerine, glyceryl caprate and glyceryl caprylate, more preferably, hexyl glycerine, ethylhexyl glycerine or glyceryl caprate, most preferably ethylhexyl glycerine or hexyl glycerine. In the most preferred embodiment compound of the formula (I) is 3-(2-ethylhexyloxy)-1,2-propandiol.

Preferred salts of aromatic acids are salts of benzoic acid. Preferred salts are salts of potassium or sodium, preferably sodium salts. Preferred esters of aromatic acids

Preferred esters of aromatic acids are alkylesters, particularly C₁-C₆ alkyl esters of benzoic acid.

Most preferred salts or esters of aromatic acids is sodium benzoate.

Preferred alkylarylic alcohols are alcohols which have a C₁-C₆ alkylene group, preferably a methylene group, between the hydroxyl group and the aromatic part of the alkylarylic alcohols. Benzyl alcohol is the most preferred alkylarylic alcohols.

Phenolic ether alcohols are alcohols which comprise an alcoholic hydroxyl group as well as an ether of a phenol. The aromatic ring of the phenol is optionally substituted. The ether oxygen and the hydroxylgroup are preferably separated by a C₂-C₄ alkylene group, preferably by an ethylene group. Phenoxyethanol is the most preferred phenolic ether alcohol.

The preferred hydroxyacetophenone is p-hydroxyacetophenone.

Aliphatic diols are alkanes which have 2 hydroxyl groups. These hydroxyl groups are preferably separated by a linear or branched C₂-C₁₀ alkylene group. Preferred aliphatic diols are vicinal diols. Preferred aliphatic diols are propane diols, butylene glycol, pentanediols, 1,2 hexanediol, most preferably, 1,3-propanediol.

Preferred hydroxamic acids are hydroxamic acids of a saturated C₃-C₁₂ alkanoic acid. Preferred hydroxamic acid is N-hydroxyoctanamide (=caprylhydroxamic acid).

Preferably the additional antimicrobial agent is selected from the group consisting of hexyl glycerine, ethylhexyl glycerine or glyceryl caprate, sodium benzoate, benzyl alcohol, phenoxyethanol and N-hydroxyoctanamide.

More preferably, the antimicrobial agent is selected from the group consisting of hexyl glycerine, ethylhexyl glycerine or glyceryl caprate and N-hydroxyoctanamide.

Most preferred, the antimicrobial agent is hexyl glycerine or ethylhexyl glycerine or N-hydroxyoctanamide.

In one of the most preferred embodiments, the further antimicrobial agent is N-hydroxyoctanamide, particularly as commercially available under the tradename Zeastat^{™} from Inolex.

This is very advantageous also in such a way that the amount of an existing antimicrobial agents can be reduced by adding the effective amount of the above hyperbranched copolymer **(HBC)** to maintain the same antimicrobial action This is particularly advantageous because certain existing antimicrobial agents are under public discussion and, hence, there exists a great desire in decreasing the amount of such antimicrobial agents.

It has been further observed that the antimicrobial action is particularly pronounced in an aqueous phase. This is very advantageous as it is known that it is typically the water phase of a product which is most susceptible to microbial growth.

In a further aspect, the invention relates to a method of inhibiting or delaying microbial breakdown of a cosmetic composition, household product, plastic, paper and/ or paint, wherein said method comprises the step of adding a hyperbranched copolymer **(HBC)** of the monomers
(i) dodecenyl succinic acid anhydride
(ii) diisopropanol amine
(iii) bis-dimethylaminopropyl amine
having terminal groups of the formula 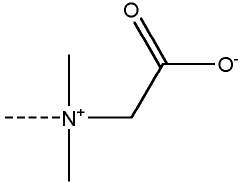 and having a molecular weight Mn of between 1200 and 4000 g/mol; in an amount of 0.005 to 5.0 % by weight, preferably of 0.05 - 5.0 % by weight, even more preferably of 0.1 - 3.0 % by weight, most preferably of 0.5 - 2.5 % by weight a, of said hyperbranched copolymer **(HBC)** based on the total weight of the composition;
to the cosmetic composition, household product, plastic, paper and/ or paint.

The details to the hyperbranched copolymer **(HBC)** has been described above for the use in great details.

### Examples

The present invention is further illustrated by the following experiments. These examples are illustrative only and are not intended to limit the scope of the invention in any way.

### Preparation of hyperbranched copolymer (HBC1)

The hyperbranched copolymer ***HBC1*** of the monomers dodecenyl succinic acid anhydride and diisopropanol amine and bis-dimethylaminopropyl amine has been prepared according to example 3 in EP 2 794 729 B1 using 237.59 g of N,N-bis(N'N'-dimethylaminopropyl)amine and 112.6 g diisopropanol amine and 426.89 g of dodecenylsuccinic anhydride. After heating and vacuum, the residual carboxylic acid content of < 0.3 meq/g (tritrimetrical analysis) AV=9.8mg KOH/g and amine content of 2.99 meq/g (tritrimetrical analysis) and a molecular weight Mn=2240 Da was obtained. This product has been reacted with sodium chloroacetate in water and stirred at 80°C until ¹H-NMR analysis shows a complete conversion of the chloroacetate to obtain the hyperbranched copolymer ***HBC1*** which has terminal groups of the formula 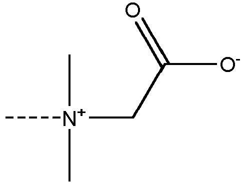 and a molecular weight Mn of 2.3 kDa.

The hyperbranched copolymer ***HBC1*** was used as a 50 % solution in water in the following experiments. The amounts indicated in the tables 1, 2 and 3 are based on the amount of polymer.

### Experimental series 1

### Preparation of cosmetic composition

O/W skin care emulsion with or without the above hyperbranched copolymer ***HBC1*** have been prepared as indicated in table 1.

### Testing of antimicrobial action (Challenge test)

The antimicrobial action has been tested according to ISO 11930 on the O/W skin care emulsion composition according to table 1 for different microorganisms. The evaluation of the preservation of a cosmetic formulation is based on inoculation of the formulation with calibrated inocula (prepared from relevant strains of micro-organisms). The number of surviving micro-organisms is measured at defined intervals during a period of 28 days. The number of microorganisms has been counted directly after inoculation, after 7 days, and after 14 days of growth and are indicated in table 2.

**Table 1 O/W skin care emulsion**

| **O/W skin care emulsion compositions** | |
|---|---|
| **Ingredients (INCI) [wt.%]** | ***1*** |
| Potassium Cetyl Phosphate | 2.0 |
| Cetearyl Alcohol | 3.0 |
| Cetyl Alcohol | 2.0 |
| Cosmetic oil | 3.0 |
| C12-15 Alkyl Benzoate | 15.0 |
| Xanthan Gum | 0.3 |
| Glycerin | 3.0 |
| ***HPC1*** | 1.5 |
| Aqua | Ad 100 |

**Table 2 Antimicrobial action of hyperbranched copolymer (HPC1) on various microorganisms. n.m. : not measured**

| Microorganism | Direct after inoculation [cfu/ml] | After 7days [cfu/ml] | After 14 days [cfu/ml] |
|---|---|---|---|
| *Escherichia coli* | 440'000 | 190'000 | n.m. |
| *Inhibition* | | *- 56.8%* | *n.a.* |
| *Pseudomonas aeruginosa* | 330'000 | 34'000 | 21'000 |
| *Inhibition* | | *- 89.7%* | *- 93.6%* |
| *Staphylococcus aureus* | 310'000 | <100 | <100 |
| *Inhibition* | | *- >99.97%* | *- >99.97%* |

### Experimental series 2

### Testing of antimicrobial action (24 hours Challenge test)

Since it is known that typically a water phase of a product is most susceptible to microbial growth, the antimicrobial efficacy has been further assessed in analogy to the regulatory challenge test method (NF EN ISO11930) for an aqueous solution.

Thus, a solution with 0.5 wt.-% ***HPC1*** or without ***HPC1*** respectively 0.1 wt.-% ***HPC1*** or Polyquaternium-4 or Polyquaternium-7 were prepared under sterile conditions. For this, it was solubilized in physiological serum with 0.85 wt.-% NaCl. The solutions were deposed in 96-deep well plates (1.6 ml/well). The wells were contaminated with *Candida albicans or Aspergillus brasiliensis,* at 3.1*10⁴ or 4.5*10⁴ cfu/ml, respectively . After the contamination each well was thoroughly mixed to ensure a homogeneous distribution of the microorganism. Then each plate was incubated at 22°C for 24h. The counting of the (remaining) population was carried out 24h after contamination and reported in table 3.

**Table 3 Antimicrobial action of hyperbranched copolymer (HPC1) on various microorganisms. n.m. = not measured. * Cellquat C-100 **TILAMAR^{®} Quat 710 (weight indicated relative to polymer content)**

| | ***Ref.1*** | ***2*** | ***3*** | ***Ref.2*** | ***Ref.3*** |
|---|---|---|---|---|---|
| ***HPC1*** [%] | | 0.5 | 1.0 | | |
| Polyquaternium-4* | | | | 1.0 | |
| Polyquaternium-7** | | | | | 1.0 |
| | | | | | |
| *Candida albicans* [cfu/ml] | 40'000 | 10'000 | 100 | 337 | 700 |
| *Inhibition* | | *-75%* | *-99.8%* | *-99.1%* | *-98.2%* |
| *Aspergillus brasiliensis* [cfu/ml] | 45'000 | 700 | 400 | 3700 | n.m. |
| *Inhibition* | | *- 98%* | *- 99%* | *- 91%* | *n.a.* |

The results of tables 2 and 3 clearly show the effect that these specific copolymers, i.e. the hyperbranched copolymers, have an antimicrobial action on a variety of microorganisms.

The comparison of example ***3*** and ***Ref.2*** or ***Ref.3*** show that ***HPC1*** is significantly better in the inhibition as compared to polyquaternium-4 or polyquaternium-7 which are quaternary ammonium polymers having different structure as ***HPC1.***

## Claims

1. Non-therapeutic use of a hyperbranched copolymer **(HBC)** of the monomers
(i) dodecenyl succinic acid anhydride
(ii) diisopropanol amine
(iii) bis-dimethylaminopropyl amine
having terminal groups of the formula 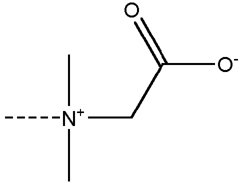 and having a molecular weight Mn of between 1200 and 4000 g/mol; as an antimicrobial agent.

2. The non-therapeutic use according to claim 1, **characterized in that** the hyperbranched copolymer **(HBC)** inhibits the growth of a microorganism selected from the group consisting of *Kocuria rhizophila, Staphylococcus aureus, Enterobacter gergoviae, Escherichia coli, Klebsiella pneumoniae, Pseudomonas aeruginosa, Pseudomonas fluorescens, Pseudomonas putida, Aspergillus brasiliensis, Penicillium pinophilum* and *Candida albicans.*

3. The non-therapeutic use according to claim 1 or 2, **characterized in that** the hyperbranched copolymer **(HBC)** inhibits the growth of *Escherichia coli, Pseudomonas aeruginosa, Staphylococcus aureus, Aspergillus brasiliensis,* and *Candida albicans.*

4. The non-therapeutic use according to anyone of the preceding claims in a product selected from the group of cosmetic compositions, household products, plastics, paper and/ or paints, preferably in a cosmetic composition.

5. The non-therapeutic use according to anyone of the preceding claims **characterized in that** the molar ratio of the monomers (i) to monomers (ii) is between 5 : 1 and 0.5 : 1, particularly between 4 : 1 and 1 : 1, preferably between 3 : 1 and 3 : 2.

6. The non-therapeutic use according to anyone of the preceding claims **characterized in that** the molar ratio of the monomers (i) to monomers (iii) is between 5 : 1 and 0.5 : 1, particularly between 3 : 1 and 1 : 1, preferably between 2.5 : 1 and 1.1 : 1.

7. The non-therapeutic use according to anyone of the preceding claims **characterized in that** the hyperbranched copolymer **(HBC)** has a number average molecular weight Mₙ of between 1400 and 3000 g/mol, preferably between 2100 and 2400 g/mol.

8. The non-therapeutic use according to anyone of the preceding claims **characterized in that** the hyperbranched copolymer **(HBC)** is polyquaternium-110 identified by CAS Number 1323977-82-7.

9. The non-therapeutic use according to anyone of the preceding claims **characterized in that** the use is a cosmetic use.

10. The non-therapeutic use according to anyone of the preceding claims **characterized in that** the use is in a deodorant, a shampoo, a conditioner, a cream or a sunscreen.

11. A method of inhibiting or delaying microbial breakdown of a cosmetic composition, household product, plastic, paper and/ or paint, wherein said method comprises the step of adding a hyperbranched copolymer **(HBC)** of the monomers
(i) dodecenyl succinic acid anhydride
(ii) diisopropanol amine
(iii) bis-dimethylaminopropyl amine
having terminal groups of the formula 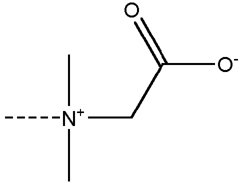 and having a molecular weight Mn of between 1200 and 4000 g/mol; in an amount of of 0.005 to 5.0 wt.-% of said hyperbranched copolymer **(HBC)** based on the total weight of the composition;
to the cosmetic composition, household product, plastic, paper and/ or paint.

12. The method of claim 11, **characterized in that** the microbial decay and breakdown is caused by a microorganism selected from the group consisting of of *Kocuria rhizophila, Staphylococcus aureus, Enterobacter gergoviae, Escherichia coli, Klebsiella pneumoniae, Pseudomonas aeruginosa, Pseudomonas fluorescens, Pseudomonas putida, Aspergillus brasiliensis, Penicillium pinophilum* and *Candida albicans.*

## Patentansprüche

1. Nichttherapeutische Anwendung eines hyperverzweigten Copolymers (HBC) der Monomere
(i) Dodecenylbernsteinsäureanhydrid
(ii) Diisopropanolamin
(iii) Bis(dimethylaminopropyl)amin
mit endständigen Gruppen der Formel 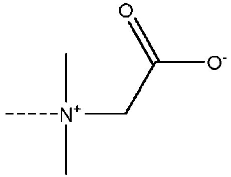 und mit einem Molekulargewicht Mn zwischen 1200 und 4000 g/mol als antimikrobielles Mittel.

2. Nichttherapeutische Verwendung nach Anspruch 1, **dadurch gekennzeichnet, dass** das hyperverzweigte Copolymer (HBC) das Wachstum eines aus der Gruppe bestehend aus *Kocuria rhizophila, Staphylococcus aureus, Enterobacter gergoviae, Escherichia coli, Klebsiella pneumoniae, Pseudomonas aeruginosa, Pseudomonas fluorescens, Pseudomonas putida, Aspergillus brasiliensis, Penicillium pinophilum* und *Candida albicans* ausgewählten Mikroorganismus hemmt.

3. Nichttherapeutische Verwendung nach Anspruch 1 oder 2, **dadurch gekennzeichnet, dass** das hyperverzweigte Copolymer (HBC) das Wachstum von *Escherichia coli, Pseudomonas aeruginosa, Staphylococcus aureus, Aspergillus brasiliensis* und *Candida albicans* hemmt.

4. Nichttherapeutische Verwendung nach einem der vorhergehenden Ansprüche in einem Produkt, das aus der Gruppe kosmetische Zusammensetzungen, Haushaltsprodukte, Kunststoffe, Papier und/oder Farben ausgewählt ist, vorzugsweise in einer kosmetischen Zusammensetzung.

5. Nichttherapeutische Verwendung nach einem der vorhergehenden Ansprüche, **dadurch gekennzeichnet, dass** das Molverhältnis der Monomere (i) zu den Monomeren (ii) zwischen 5 : 1 und 0,5 : 1, besonders zwischen 4 : 1 und 1 : 1, bevorzugt zwischen 3 : 1 und 3 : 2 liegt.

6. Nichttherapeutische Verwendung nach einem der vorhergehenden Ansprüche, **dadurch gekennzeichnet, dass** das Molverhältnis der Monomere (i) zu den Monomeren (iii) zwischen 5 : 1 und 0,5 : 1, besonders zwischen 3 : 1 und 1 : 1, bevorzugt zwischen 2,5 : 1 und 1,1 : 1 liegt.

7. Nichttherapeutische Verwendung nach einem der vorhergehenden Ansprüche, **dadurch gekennzeichnet, dass** das hyperverzweigte Copolymer (HBC) ein zahlenmittleres Molekulargewicht Mₙ zwischen 1400 und 3000 g/mol, bevorzugt zwischen 2100 und 2400 g/mol aufweist.

8. Nichttherapeutische Verwendung nach einem der vorhergehenden Ansprüche, **dadurch gekennzeichnet, dass** es sich bei dem hyperverzweigten Copolymer (HBC) um Polyquaternium-110 unter CAS Number 1323977-82-7 handelt.

9. Nichttherapeutische Verwendung nach einem der vorhergehenden Ansprüche, **dadurch gekennzeichnet, dass** es sich bei der Verwendung um eine kosmetische Verwendung handelt.

10. Nichttherapeutische Verwendung nach einem der vorhergehenden Ansprüche, **dadurch gekennzeichnet, dass** es sich um die Verwendung in einem Deodorant, einem Shampoo, einem Conditioner, einer Creme oder einem Sonnenschutzmittel handelt.

11. Verfahren zur Hemmung oder Verzögerung des mikrobiellen Abbaus einer kosmetischen Zusammensetzung, eines Haushaltsprodukts, eines Kunststoffs, eines Papiers und/oder einer Farbe, wobei das Verfahren den Schritt des Zugebens eines hyperverzweigten Copolymers (HBC) der Monomere
(i) Dodecenylbernsteinsäureanhydrid
(ii) Diisopropanolamin
(iii) Bis(dimethylaminopropyl)amin
mit endständigen Gruppen der Formel 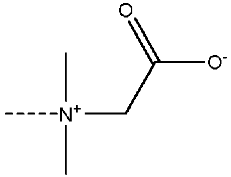
und mit einem Molekulargewicht Mn zwischen 1200 und 4000 g/mol in einer Menge von
von 0,005 bis 5,0 Gew.-% des hyperverzweigten Copolymers (HBC), bezogen auf das Gesamtgewicht der Zusammensetzung, zu der kosmetischen Zusammensetzung, dem Haushaltsprodukt, Kunststoff, Papier und/oder der Farbe umfasst.

12. Verfahren nach Anspruch 11, **dadurch gekennzeichnet, dass** der mikrobielle Zerfall und Abbau durch einen Mikroorganismus verursacht wird, der aus der Gruppe bestehend aus *Kocuria rhizophila, Staphylococcus aureus, Enterobacter gergoviae, Escherichia coli, Klebsiella pneumoniae, Pseudomonas aeruginosa, Pseudomonas fluorescens, Pseudomonas putida, Aspergillus brasiliensis, Penicillium pinophilum* und *Candida albicans* ausgewählt ist.

## Revendications

1. Utilisation non thérapeutique d'un copolymère hyperramifié (HBC) des monomères
(i) anhydride d'acide dodécénylsuccinique
(ii) diisopropanolamine
(iii) bis-diméthylaminopropylamine
ayant des groupes terminaux de la formule 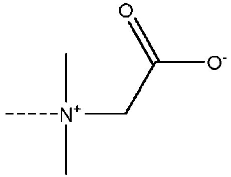 et ayant un poids moléculaire Mn compris entre 1 200 et 4 000 g/mole ; comme agent antimicrobien.

2. Utilisation non thérapeutique selon la revendication 1, **caractérisée en ce que** le copolymère hyperramifié **(HBC)** inhibe la croissance d'un micro-organisme choisi dans le groupe constitué par *Kocuria rhizophila, Staphylococcus aureus, Enterobacter gergoviae, Escherichia coli, Klebsiella pneumoniae, Pseudomonas aeruginosa, Pseudomonas fluorescens, Pseudomonas putida, Aspergillus brasiliensis, Penicillium pinophilum et Candida albicans.*

3. Utilisation non thérapeutique selon la revendication 1 ou 2, **caractérisée en ce que** le copolymère hyperramifié **(HBC)** inhibe la croissance *d'Escherichia coli, Pseudomonas aeruginosa, Staphylococcus aureus, Aspergillus brasiliensis* et *Candida albicans.*

4. Utilisation non thérapeutique selon l'une quelconque des revendications précédentes dans un produit choisi dans le groupe des compositions cosmétiques, des produits ménagers, des matières plastiques, du papier et/ou des peintures, de préférence dans une composition cosmétique.

5. Utilisation non thérapeutique selon l'une quelconque des revendications précédentes, **caractérisée en ce que** le rapport molaire des monomères (i) sur les monomères (ii) est compris entre 5 : 1 et 0,5 : 1, particulièrement entre 4 : 1 et 1 : 1, de préférence entre 3 : 1 et 3 : 2.

6. Utilisation non thérapeutique selon l'une quelconque des revendications précédentes, **caractérisée en ce que** le rapport molaire des monomères (i) sur les monomères (iii) est compris entre 5 : 1 et 0,5 : 1, particulièrement entre 3 : 1 et 1 : 1, de préférence entre 2,5 : 1 et 1,1 : 1.

7. Utilisation non thérapeutique selon l'une quelconque des revendications précédentes, **caractérisée en ce que** le copolymère hyperramifié **(HBC)** a un poids moléculaire moyen en nombre Mₙ compris entre 1 400 et 3 000 g/mole, de préférence entre 2 100 et 2 400 g/mole.

8. Utilisation non thérapeutique selon l'une quelconque des revendications précédentes, **caractérisée en ce que** le copolymère hyperramifié **(HBC)** est le polyquaternium-110 identifié par le numéro CAS 1323977-82-7.

9. Utilisation non thérapeutique selon l'une quelconque des revendications précédentes, **caractérisée en ce que** l'utilisation est une utilisation cosmétique.

10. Utilisation non thérapeutique selon l'une quelconque des revendications précédentes, **caractérisée en ce que** l'utilisation est dans un déodorant, un shampooing, un après-shampooing, une crème ou un écran solaire.

11. Procédé pour inhiber ou retarder la dégradation microbienne d'une composition cosmétique, d'un produit ménager, d'une matière plastique, d'un papier et/ou d'une peinture, dans lequel ledit procédé comprend l'étape d'ajout d'un copolymère hyperramifié **(HBC)** des monomères
(i) anhydride d'acide dodécénylsuccinique
(ii) diisopropanolamine
(iii) bis-diméthylaminopropylamine
ayant des groupes terminaux de la formule 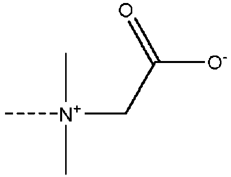
et ayant un poids moléculaire Mn compris entre 1 200 et 4 000 g/mole ; en une quantité de
0,005 à 5,0 % en poids dudit copolymère hyperramifié (HBC) par rapport au poids total de la composition ;
à la composition cosmétique, au produit ménager, à la matière plastique, au papier et/ou à la peinture.

12. Procédé selon la revendication 11, **caractérisé en ce que** la désintégration et la dégradation microbiennes sont provoquées par un micro-organisme choisi dans le groupe constitué par *Kocuria rhizophila, Staphylococcus aureus, Enterobacter gergoviae, Escherichia coli, Klebsiella pneumoniae, Pseudomonas aeruginosa, Pseudomonas fluorescens, Pseudomonas putida, Aspergillus brasiliensis, Penicillium pinophilum* et *Candida albicans.*
